# NEUE EUROPÄISCHE PATENTSCHRIFT

(11) **EP 1 301 355 B2**
(45) Veröffentlichungstag und Bekanntmachung des Hinweises auf die Entscheidung über den Einspruch: **25.11.2015**
(45) Hinweis auf die Patenterteilung: 12.12.2007
(21) Anmeldenummer: 01954006.1
(22) Anmeldetag: 04.07.2001
(51) Int. Cl.: B42D 25/00, G06K 19/16

(54) **SICHERHEITSPAPIER UND DARAUS HERGESTELLTES WERTDOKUMENT**
ANTIFALSIFICATION PAPER AND SECURITY DOCUMENT PRODUCED THEREFROM
PAPIER DE SECURITE ET VALEUR PRODUITE A PARTIR DUDIT PAPIER

(30) Priorität: 05.07.2000 DE 10032128
(43) Veröffentlichungstag der Anmeldung: 16.04.2003
(73) Patentinhaber: Giesecke & Devrient GmbH, 81677 München (DE)
(72) Erfinder: SCHNEIDER, Walter, 83714 Miesbach (DE); HOFFMANN, Lars, 85334 Freising (DE); LOESSL ZAHEDI, Martin, 81927 München (DE)
(74) Vertreter: Klunker . Schmitt-Nilson . Hirsch
(86) Internationale Anmeldenummer: PCT/EP2001/007652
(87) Internationale Veröffentlichungsnummer: WO 2002/002350

(56) Entgegenhaltungen:
- EP-A- 0 723 875
- EP-A- 0 930 174
- WO-A1-00/07151
- WO-A1-00/36560
- WO-A1-99/54842
- WO-A2-97/21184
- DE-A- 19 601 358
- DE-A1- 19 601 358
- US-A- 4 472 627
- US-A- 4 856 857
- US-A- 5 920 058

## Beschreibung

Die Erfindung betrifft ein Sicherheitspapier für die Herstellung von Wertdokumenten, wie Banknoten, Urkunden, etc., mit wenigstens einem mehrschichtigen Sicherheitselement, das wenigstens einen visuell prüfbaren optischen Effekt aufweist, wobei das Sicherheitselement zumindest teilweise auf der Oberfläche des Sicherheitspapiers angeordnet ist. Die Erfindung betrifft ferner ein mehrschichtiges Sicherheitselement sowie ein Wertdokument mit einem derartigen Sicherheitselement. Auch ein Transfermaterial zur Aufbringung eines mehrschichtigen Sicherheitselements auf ein Wertdokument und ein Verfahren zur Herstellung des Transfermaterials bzw. des Wertdokuments sind Gegenstand der Erfindung.

Es besteht ein ständiges Interesse daran, Wertpapiere gegen Verfälschungen und unerlaubtes Reproduzieren zu schützen. Gerade im Hinblick auf die heutigen Kopier- und Drucktechniken wird es immer schwieriger, wirksame Sicherheitsmerkmale zu finden, die eine unerlaubte Reproduktion bzw. Verfälschung wenn nicht verhindern, so doch zumindest deutlich kenntlich machen.

In der EP 0 019191 B1 wird beispielsweise vorgeschlagen, ein Wertpapier mit einer integrierten Schaltung zu versehen, in die eine prüfbare Codierung eingeschrieben ist, wobei die Kommunikation mit dem integrierten Schaltkreis vorzugweise kontaktlos über Antennen erfolgt. Der integrierte Schaltkreis wird dabei in die Aussparung einer zumindest teilweise metallisierten Trägerfolie eingesetzt. Diese Folie wird anschließend zwischen zwei Papierbahnen laminiert. Da die Trägerfolie jedoch lediglich zwischen den zwei Papierbahnen einlaminiert ist, besteht die Gefahr, dass die Schichten relativ einfach voneinander getrennt werden können, so dass das mit dem Chip versehene Kunststoffinlett für eventuelle Fälschungen verwendet werden kann. Ferner handelt es sich bei diesem Sicherheitselement um ein rein maschinell prüfbares Sicherheitselement, das nur mittels spezieller Detektoren überprüfbar ist.

Als sehr einfach visuell überprüfbares und sehr auffälliges Echtheitsmerkmal werden häufig optisch variable Sicherheitselemente, wie beispielsweise Hologramme, verwendet, die unter unterschiedlichen Betrachtungswinkeln unterschiedliche visuelle Eindrücke, wie beispielsweise Farbeindrücke oder Informationen, zeigen. Ein Wertpapier mit einem derartigen Sicherheitselement ist aus der EP 0 440 045 A2 bekannt. Hier wird eine Banknote beschrieben, die mit einem etikettartig ausgebildeten Hologramm versehen ist. Da der optisch variable Effekt des Hologramms von einem Farbkopierer nicht wiedergegeben werden kann, bieten diese Sicherheitselemente einen sehr guten Schutz gegen Farbkopieren. Allerdings besitzen diese Sicherheitselemente den Nachteil, dass sie maschinell nur sehr schwer prüfbar sind, da die von den Beugungsstrukturen des Hologramms reflektierte Strahlung unter bestimmten Raumwinkeln nachgewiesen und der Einffuss von Streustrahlung weitgehend ausgeschlossen werden muss, um das Vorhandensein eines bestimmten Hologramms sicher feststellen zu können. Ein weiteres Problem ist die schwankende Signalintensität, da diese stark von der Beleuchtungsquelle des Hologramms abhängt. Für eine sichere Messung muss daher für definierte Lichtverhältnisse gesorgt werden.

Um dieses Problem zu umgehen, wurde daher auch bereits vorgeschlagen, ein visuell gut sichtbares Hologramm mit einem rein maschinell lesbaren Lasertransmissionshologramm zu überlagern (DE 38 40 037 C2). Das Auslesen des maschinenlesbaren Hologramms kann dabei nur mittels eines Lasers erfolgen, wobei die in diesem Lasertransmissionshologramm versteckt enthaltene Information an eine bestimmte Raumkoordinate vor dem Wertdokument projeziert wird, die bereits bei der Aufnahme des Hologramms festgelegt ist. An dieser Stelle muss sich der Detektor befinden, um diese versteckte Information erkennen zu können. Diese Art der visuellen und maschinellen Absicherung eines Wertdokuments ist allerdings sowohl in der Herstellung als auch in der Überprüfung sehr aufwändig.

Die WO 99/54842 beschreibt ein Papiersubstrat mit einem integrierten Schaltkreis, welcher aus einem halbleitenden, organischen Polymer gebildet ist. Die Verwendung eines solchen halbleitenden, organischen Polymers als Basismaterial für den integrierten Schaltkreis macht es möglich, das Substrat direkt in der erforderlichen Dicke herzustellen. Stütz- oder Schutzschichten sind verzichtbar. Weiterhin ergeben sich Kostenvorteile im Vergleich zu integrierten Schaltkreisen auf Silizium-Basis.

Der Erfindung liegt daher die Aufgabe zugrunde, ein Wertdokument bzw. ein Sicherheitspapier mit einem Sicherheitselement vorzuschlagen, das einen visuell prüfbaren optischen Effekt aufweist und auch maschinell prüfbar ist, wobei das Sicherheitspapier bzw. Wertdokument möglichst einfach und kostengünstig herstellbar ist.

Diese Aufgabe wird durch die Merkmale der unabhängigen Ansprüche gelöst. Weiterbildungen sind Gegenstand der Unteransprüche.

Im Sinne der Erfindung bezeichnet "Sicherheitspapier" das unbedruckte Papier, das neben dem erfindungsgemäßen Sicherheitselement weitere Echtheitsmerkmale, wie im Volumen vorgesehene Lumineszenzstoffe, einen Sicherheitsfaden oder dergleichen, aufweisen kann. Es liegt üblicherweise in quasi endloser Form vor und wird zu einem späteren Zeitpunkt weiterverarbeitet.

Als "Wertdokument" wird ein Dokument bezeichnet, das für seinen bestimmungsgemäßen Gebrauch fertig gestellt ist. Dabei kann es sich beispielsweise um ein bedrucktes Wertpapier, wie eine Banknote, Urkunde oder dergleichen, eine Ausweiskarte, einen Pass oder ein sonstiges, eine Absicherung benötigendes Dokument handeln.

Im Folgenden wird die Erfindung anhand des Sicherheitspapiers beschrieben. Die Vorteile und Ausführungsformen gelten allerdings analog für Wertdokumente.

Gemäß der Erfindung wird das Sicherheitspapier mit wenigstens einem mehrschichtigen Sicherheitselement versehen, das einen visuell einfach prüfbaren und kopiertechnisch nicht oder nur verfälscht wiedergebbaren optischen Effekt aufweist. Dieses Sicherheitselement ist zumindest teilweise auf der Oberfläche des Sicherheitspapiers angeordnet und enthält in einer seiner innen liegenden Schichten wenigstens einen integrierten Schaltkreis. Bei diesem integrierten Schaltkreis handelt es sich beispielsweise um einen reinen Speicherchip (ROM), einen wiederbeschreibbaren Chip (EPROM, EEPROM) oder auch um einen Mikroprozessorchip. Die verwendeten Chips besitzen eine Dicke von 5 µm bis 50 µm, vorzugsweise 10 µm und eine Kantenlänge von ca. 0,1 mm bis 3 mm, vorzugsweise 0,6 mm. Auf dem Chip befinden sich vorzugsweise 2 bis 4 Kontaktflächen.

Der optische Effekt des Sicherheitselements kann durch eine Schicht erzeugt werden, die optisch variable Pigmente, insbesondere Interferenzschicht- oder Flüssigkristallpigmente, enthält. Diese Schicht kann vollflächig oder in Form von Informationen vorliegen. Alternativ kann das Sicherheitselement auch ein Hologramm, Kinegramm oder eine andere Beugungsstruktur aufweisen. Vorzugsweise werden die Beugungsstrukturen dabei in Form einer Reliefstruktur in eine Kunststoffschicht eingeprägt. Sofern die Beugungsstrukturen in Reflexion beobachtbar sein sollen, werden sie mit einer Reflexionsschicht, insbesondere mit einer Metallschicht oder einer dielektrischen Schicht mit hohem Brechungsindex, kombiniert. Die Reflexionsschicht muss jedoch nicht vollflächig vorgesehen sein, sondern kann in Form eines Rasters oder einer beliebigen anderen Information aufgebracht werden. Insbesondere kann sie Aussparungen in Form von Mustern oder Zeichen aufweisen. Eine weitere Möglichkeit zur Erzeugung eines visuell prüfbaren optischen Effekts besteht darin, Dünnschichtaufbauten zu verwenden, bei denen metallische und/ oder dielektrische Schichten mit unterschiedlichen Brechungsindices übereinander angeordnet werden, wobei die Schichten so zusammenwirken, dass zumindest bei Betrachtung in Reflexion unter verschiedenen Betrachtungswinkeln unterschiedliche visuelle Eindrücke entstehen. Dabei handeltes sich bevorzugt um unterschiedliche Farbeindrücke.

Alternativ kann der optische Effekt aber auch durch ein beliebiges Druckbild oder eine metallische Schicht mit Aussparungen in Form von Mustern, Zeichen oder dergleichen erzeugt werden. Die Metallschicht selbst kann ebenfalls in Form von Zeichen oder Mustern vorliegen. Auch die Verwendung spezieller Druckfarben, wie lumineszierender Druckfarben, ist möglich. Selbstverständlich können auch mehrere einen optischen Effekt erzeugende Sicherheitsmerkmale verwendet werden. Wenn im Folgenden von einer einen optischen Effekt erzeugenden Schicht die Rede ist, so sind darunter auch zusammenwirkende Mehrschichtaufbauten, wie die erwähnten dielektrischen Dünnschichtelemente oder Kombinationen aus mehreren Schichten, die unterschiedliche optische Effekte erzeugen, zu verstehen. Der Begriff "Hologramm" wird ebenfalls stellvertretend für beliebige Beugungsstrukturen verwendet.

Der erfindungsgemäße integrierte Schaltkreis ist vorzugsweise zwischen diese den optischen Effekt aufweisende Schicht und dem Sicherheitspapier angeordnet. Auf diese Weise ist er nach außen vor Umwelteinflüssen geschützt und tritt visuell praktisch nicht in Erscheinung. Vorteilhafterweise werden integrierte Schaltkreise verwendet, mit welchen die Kommunikation kontaktlos über ein Koppelelement erfolgt. Dabei kann das Koppelelement bereits ein integrierter Bestandteil des integrierten Schaltkreises sein oder aber in einer Schicht des Sicherheitselements angeordnet werden. Bei der Integration des Koppelements in den Schichtaufbau des Sicherheitselements ergibt sich der Vorteil, dass der Schaltkreis bei Manipulations- oder Fälschungsversuchen nicht funktionsfähig von einem Originalsicherheitselement bzw. einem damit ausgestatteten Sicherheitspapier getrennt werden kann, beispielsweise um ihn in eine gefälschte Reproduktion einzubringen. Bei dem Koppelelement kann es sich um einen Schleifendipol, um eine Spule oder einen offenen Dipol handeln. Um die Effektivität des Systems zu erhöhen, können der Schleifendipol oder die Spule auch eine metallisierte Kernzone aufweisen. Ist das Koppelelement in der den optischen Effekt erzeugenden Schicht ausgebildet, bewirkt die ausgefüllte Kernzone auch, dass der visuelle Eindruck der Schicht durch das Koppelelement weniger störend beeinflusst wird. Die Lesereichweite beträgt je nach Art des Koppelelements und gewählter Lese-/Schreibfrequenz, beispielsweise 13,56 Mhz und 2 Ghz, zwischen ca. 0,1 mm bis einige cm.

Das erfindungsgemäße Sicherheitselement wird vorzugsweise nach der Papierherstellung auf das Sicherheitspapier aufgebracht und derart mit dem Sicherheitspapier verbunden, dass es nicht ohne Zerstörung des Sicherheitspapiers bzw. des Sicherheitselements wieder abgezogen werden kann. Die Erfindung hat somit den Vorteil, dass das Sicherheitselement nicht in den Papierherstellungsprozess, integriert werden muss und dennoch fälschungssicher mit dem Wertpapier verbunden ist. Ein weiterer Vorteil besteht darin, dass das Sicherheitselement in mehrfacher Hinsicht gegen Fälschungsversuche geschützt ist. Der optische Effekt der dem Betrachter zugewandten Schichten kann mit Kopiergeräten oder anderen Reproduktionstechniken nicht originalgetreu wiedergegeben werden, so dass derartige Fälschungsversuche bereits visuell einfach und schnell erkannt werden können.

Falls es jedoch gelingen sollte, den optischen Eindruck des Sicherheitselements nachzustellen oder zu imitieren, so kann die Fälschung bei der maschinellen Überprüfung des integrierten Schaltkreises dennoch erkannt weren. Da dieser im Inneren des Sicherheitselements angeordnet ist und von den den optischen Effekt erzeugenden Schichten verdeckt wird, wird ein potentieller Fälscher dieses zusätzliche Echtheitsmerkmal nicht bemerken und daher auch nicht versuchen zu imitieren.

Das erfindungsgemäße Sicherheitselement ist vorzugsweise als mehrschichtiges selbsttragendes Etikett oder als Transferelement ausgebildet, das mit dem Sicherheitspapier nach dessen Herstellung verbunden wird. Die Umrissform des Sicherheitselements ist dabei frei wählbar. Alternativ kann das Sicherheitselement auch als Sicherheitsfaden ausgebildet sein. In diesem Fall werden der integrierte Schaltkreis und die den optischen Effekt erzeugende Schicht auf einem fadenförmigen Kunststoffsubstrat angeordnet, das während der Papierherstellung so in die Papierbahn eingebracht wird, dass der Faden in Teilbereichen direkt an die Oberfläche des Sicherheitspapiers tritt. Gemäß einer bevorzugten Ausführungsform besteht der Sicherheitsfaden aus zwei Kunststoffsubstraten, zwischen welchen der integrierte Schaltkreis und die den optischen Effekt erzeugende Schicht angeordnet sind.

Als "Transferelement" im Sinne der Erfindung wird ein Sicherheitselement bezeichnet, das auf einer separaten Trägerschicht, beispielsweise einer Kunststofffolie, in der umgekehrten Reihenfolge, wie sie später auf dem Sicherheitspapier zu liegen kommt, vorbereitet wird und anschließend mittels einer Klebstoff- oder Lackschicht in den gewünschten Umrissformen auf das Sicherheitspapier übertragen wird. Die Trägerschicht kann nach dem Übertrag von dem Schichtaufbau des Sicherheitselements abgezogen werden oder als Schutzschicht als fester Bestandteil des Sicherheitselements auf dem Schichtaufbau verbleiben.

Die einzelnen Transferelemente können auf der Trägerschicht als separate Einzelelemente in den zu übertragenden Umrissformen vorbereitet werden. Alternativ wird die Schichtfolge der Transferelemente in kontinuierlicher Form auf der Trägerschicht vorgesehen. Derartige Trägerschichten mit voneinander beabstandeten einzelnen Transferelementen oder einem kontinuierlich verlaufenden Schichtaufbau werden im Folgenden als "Transfermaterial" bezeichnet und die auf der Trägerschicht angeordnete Schichtfolge des Sicherheitselements als "Übertragungslage".

Im Falle der kontinuierlichen Übertragungslage wird das Transfermaterial anschließend über eine Klebstoffschicht mit dem Sicherheitspapier verbunden und die Klebstoffschicht über entsprechende Prägewerkzeuge aktiviert, so dass die Übertragungslage nur in den aktivierten Bereichen an dem Sicherheitspapier haftet. Alle übrigen Bereiche werden anschließend mit der Trägerschicht abgezogen. Alternativ kann auch die Kleberschicht in Form des zu übertragenden Sicherheitselements ausgeführt sein. Als Klebstoffe werden vorzugsweise Heißschmelzkleber verwendet. Es können jedoch auch beliebige andere Klebstoffe, wie Reaktionslacke, verwendet werden.

Das Sicherheitselement kann alternativ auch auf das Wertdokument aufgebracht werden. Die im Zusammenhang mit dem Sicherheitspapier beschriebenen Ausführungsvarianten und Befestigungsmöglichkeiten gelten in diesem Fall analog.

Im Folgenden werden einige bevorzugte Schichtfolgen des erfindungsgemäßen Sicherheitselements am Beispiel des Transfermaterials näher erläutert.

Die analoge Schichtfolge, nur in entsprechend umgekehrter Schichtreihenfolge ist selbstverständlich auch für Etiketten und Sicherheitsfäden verwendbar.

In der einfachsten Form besteht das Transfermaterial aus einer Trägerschicht, insbesondere einer transparenten Kunststofffolie, wenigstens einer den optischen Effekt erzeugenden Schicht und wenigstens einem integrierten Schaltkreis. Der integrierte Schaltkreis beinhaltet in dieser Ausführungsvariante auch das Koppelelement für die Kommunikation mit einem Schreib-/Lesegerät.

Wird ein integrierter Schaltkreis verwendet, der kein integriertes Koppelelement aufweist, so muss im Schichtaufbau der Übertragungslage des Transfermaterials ein entsprechendes Koppelelement vorgesehen werden. Die Übertragungslage mit dem integrierten Koppelelement wird dabei vorzugsweise als dünne, nicht selbsttragende Folie ausgebildet. Dadurch werden Fälschungsversuche, die auf ein Ablösen des Originalsicherheitselements von einem Sicherheitspapier abzielen, vereitelt, da das nicht selbsttragende Sicherheitselement nicht entfernbar ist, ohne es zu beschädigen.

Bei diesem Koppelelement kann es sich um einen offenen Dipol, einen Schleifendipol oder auch eine Spule handeln. Dieses Koppelelement wird vorzugsweise durch entsprechende Demetallisierungen in einer Metallschicht erzeugt. Hierfür wird die Trägerschicht des Transfermaterials, die gegebenenfalls mit einer Trennschicht versehen ist, mit der den optischen Effekt erzeugenden Schicht versehen. Anschließend wird auf diese Schicht in Form der zu demetallisierenden Bereiche eine wasserlösliche oder eine andere mittels eines Lösungsmittels lösliche Schicht aufgedruckt. Im nächsten Schritt wird die Trägerschicht auf der bedruckten Seite vollständig metallisiert. In einem letzten Schritt werden die lösliche Druckfarbe sowie die in diesen Bereichen vorhandene Metallisierung entfernt. Auf dieser Schicht wird der integrierte Schaltkreis mittels einer leitfähigen Kleberschicht, wie beispielsweise Leitsilber oder einem anisotropen Leitkleber, befestigt. Schließlich wird die Trägerschicht zumindest bereichsweise mit einer Kleberschicht versehen.

Alternativ kann die Strukturierung der Metallschicht auch mittels bekannter Ätztechniken erfolgen. Hierbei wird die Trägerschicht nach dem Aufbringen der den optischen Effekt erzeugenden Schicht direkt mit der vollflächigen Metallisierung versehen. Die Metallschicht wird anschließend in Form des gewünschten Koppelelements mit einer Schutzlackschicht bedruckt. Die nicht abgedeckten Bereiche werden anschließend mit entsprechenden Lösungsmitteln entfernt. Die Schutzschicht kann auch phototechnisch erzeugt werden, indem die Metallschicht mit einem Photoresist vollflächig beschichtet wird, der anschließend belichtet und entwickelt wird.

Gemäß einer Variante kann die das Koppelelement bildende metallische Schicht von der den optischen Effekt erzeugenden Schicht durch eine Isolationsschicht getrennt sein. Dies ist insbesondere dann notwendig, wenn die den optischen Effekt erzeugende Schicht ebenfalls eine leitfähige Schicht aufweist.

Gemäß einer weiteren Ausführungsform der Erfindung ist es jedoch auch möglich, dass die metallische Schicht zugleich für den visuell optischen Effekt benötigt wird. Wird beispielsweise ein Reflexionshologramm verwendet, so besteht die den optischen Effekt erzeugende Schicht üblicherweise aus einer Prägelackschicht, in die die Beugungsstrukturen des Hologramms in Form einer Reliefstruktur eingeprägt sind, und einer Metallschicht. Die Trägerschicht des Transfermaterials wird dabei zuerst mit der Prägelackschicht versehen, in die die Beugungsstrukturen eingeprägt werden. Anschließend wird diese Lackschicht mit einer Metallschicht versehen. Bevor jedoch die Metallschicht vorzugsweise aufgedampft wird, wird, wie bereits erläutert, eine lösliche Farbe für die Erzeugung des Koppelelements aufgedruckt. Nach der Metallisierung wird die lösliche Farbe entfernt und, wie ebenfalls bereits beschrieben, der integrierte Schaltkreis aufgebracht. Auch hier können alternativ die bereits erwähnten Ätztechniken zur Strukturierung der Metallschicht verwendet werden.

Bei dieser Ausführungsform ist das Koppelelement visuell zu erkennen, wenn die Prägelackschicht, welche beim fertigen Sicherheitselement die äußerste, dem Betrachter zugewandte Schicht bildet, transparent ist. Sofern dieser Effekt unerwünscht ist, kann die Prägelackschicht eingefärbt werden. Vorzugsweise werden hierfür metallische Pigmente verwendet. Alternativ wird das Sicherheitselement bzw. das Sicherheitspapier mit einer Folie laminiert oder einem Aufdruck versehen, der den optischen Eindruck des Koppelelements kaschiert.

Diese Variante hat den zusätzlichen Vorteil, dass die für den optischen Effekt sorgenden Schichten des Sicherheitselements untrennbar mit dem maschinell prüfbaren integrierten Schaltkreis verbunden sind. Manipulationen an den optischen Effekt erzeugenden Schichten beeinflussen damit auch gleichzeitig das maschinenlesbare Modul.

Das Koppelelement besteht aus einer entsprechend geformten Metallschicht. Es kann, gemäß einer Variante, die nicht Gegenstand der Erfindung ist, auch von einer leitfähigen Polymerschicht gebildet werden, die beispielsweise entsprechend verdruckt wird.

Die Verbindung zwischen Koppelelement und Chip erfolgt in allen Ausführungsformen entweder über elektrisch leitfähige Verbindungselemente, wie leitfähige Kleber, Lötzinn etc., oder auch kontaktlos, z.B. kapazitiv.

Um zu verhindern, dass eine Manipulation durch Ausstanzen eines Schaltkreises samt Koppelelement aus einem Sicherheitselement bzw. einem damit versehenem Sicherheitspapier nicht auffällt, wird das Koppelelement vorzugsweise großflächig gestaltet. Bereits ab einer vom Koppelelement eingenommenen Fläche von 20 mm² oder größer wären die entstehenden Stanzlöcher visuell auch für Laien sehr auffällig

Das mit den erfindungsgemäßen Sicherheitselementen versehene Sicherheitspapier kann anschließend zu beliebigen Wertdokumenten verarbeitet werden. Werden aus dem Sicherheitspapier beispielsweise Banknoten hergestellt, so wird das Sicherheitspapier üblicherweise in Bögen mit mehreren Nutzen geschnitten, die anschließend in entsprechenden Druckmaschinen verarbeitbar sind. Jeder Nutzen weist dabei zumindest ein erfindungsgemäßes Sicherheitselement auf. In einer bevorzugten Ausführungsform ist das Sicherheitselement als Streifen ausgebildet, der parallel zu einer der Kanten eines Nutzens verläuft. Dies hat den Vorteil, dass das Sicherheitselement in einem kontinuierlichen Prozess auf das Sicherheitspapier übertragen werden kann.

Beim Druckvorgang kann auch der Bereich des Sicherheitselements zumindest teilweise mit überdruckt werden, wodurch die Fälschungssicherheit des Wertdokuments weiter erhöht wird, insbesondere wenn für den Überdruck ein taktil fühlbarer Stahltiefdruck verwendet wird. Das erfindungsgemäße Sicherheitspapier kann jedoch auch für die Herstellung anderer Wertdokumente, wie Pässe, Aktien, Visa, Ausweiskarten, Urkunden, Eintrittskarten, Begleitpapiere des Transportwesens, Sicherheitsetiketten oder Schecks etc. verwendet werden. Die Wertdokumente können ihrerseits wieder als Fälschungsschutzelement an beliebigen Produkten, wie CD's, Parfums, pharmazeutischen Produkten, Verpackungen aller Art, befestigt werden.

Die Fälschungssicherheit des erfindungsgemäßen Wertdokuments kann noch weiter erhöht werden, indem bestimmte für das Wertdokument relevante Daten im integrierten Schaltkreis prüfbar gespeichert werden. So kann beispielsweise die Geschichte der Verwendung des Wertdokuments im integrierten Schaltkreis gespeichert werden. Bei Banknoten beispielsweise können Informationen über ihre Ausgabe und ihren weiteren Lebenslauf gespeichert werden und damit eine bisher kaum mögliche Auswertung des Umlaufverhaltens der Banknoten ermöglichen. Ebenso denkbar ist die Speicherung von Informationen über die Umlauffähigkeit bzw. Nichtumlauffähigkeit von Banknoten.

Ferner ist es möglich, Wertdokumente für bestimmte Anwendungen zu markieren bzw. zu sperren. Besonders vorteilhafte Möglichkeiten könnte eine derartige Markierung im Umgang mit Erpressergeld eröffnen.

Der integrierte Schaltkreis des Sicherheitselements kann in einer besonderen Ausführungsform zusätzlich mit einem lichtempfindlichen Sensor ausgestattet oder verbunden sein, der ebenfalls im Sicherheitspapier bzw. im Sicherheitselement enthalten ist und beispielsweise Lichteinfall, Wärme, Magnetismus und andere Eigenschaften erkennt. Die Messwerte solcher Sensoren werden dem integrierten Schaltkreis mitgeteilt und dort gespeichert. Auf diese Weise kann beispielsweise jeder Kopiervorgang eines Dokuments als Lichteinfall registriert und die Zahl der Kopiervorgänge im integrierten Schaltkreis gespeichert werden. Dies bietet den Vorteil, dass zwischen legalen und illegalen Kopien unterschieden werden kann. Bei der Durchführung einer legalen Kopie ist dem Benutzer bekannt, dass ein entsprechender Sensor im Sicherheitspapier vorhanden ist, so dass er anschließend mit einem nur ihm verfügbaren Gerät die Information über die stattgefundene legale Vervielfältigung wieder löschen kann. Eine illegale Vervielfältigung wird jedoch nicht gelöscht. Wird vor jedem Kopiervorgang geprüft, ob der entsprechende Speicher des integrierten Schaltkreises einen Eintrag aufweist, können weitere Kopien verhindert werden. Diese Vorgehensweise eignet sich insbesondere für Dokumente, die üblicherweise lichtdicht verschlossen gelagert werden.

Alternativ können in dem integrierten Schaltkreis auch Identifikationsnummern der einzelnen Kopiergeräte gespeichert werden. Dies eröffnet die Möglichkeit, dass zu einem späteren Zeitpunkt sämtliche zur Herstellung von Kopien benutzte Geräte identifiziert werden können. Dies kann bei der Ermittlung von Fälschern nützlich sein. Schließlich können auch Kopiergeräte mit entsprechenden Lesegeräten ausgestattet werden, die beim Auslesen einer entsprechenden Markierung aus dem integrierten Schaltkreis einen Kopiervorgang des Wertdokuments verhindern.

Der integrierte Schaltkreis kann ferner auch dazu benutzt werden, eine Art elektronischen Stempel einer ausstellenden Behörde zu speichern. Dies ist insbesondere bei Visa oder Pässen von Vorteil. Hierfür ist es sinnvoll, jedes Wertdokument mit einer individuellen Information zu versehen. Hierbei kann es sich um einfache Zufallszahlen handeln oder auch um komplexere Informationen, in welchen dem Dokument eigentümliche Merkmale, wie besondere Drucktoleranzen, Transmissionseigenschaften des Papiers oder sonstiges mit verarbeitet sein können. Diese Informationen können ferner kryptographisch verschlüsselt sein.

Der integrierte Schaltkreis kann jedoch auch zur Absicherung der auf dem Wertdokument aufgebrachten leserlichen Informationen dienen. Denn wird beispielsweise auf ein Wertdokument eine Identifizierungsinformation, wie beispielsweise eine Nummer und eine Angabe des Ausstellers eingetragen, so kann die entsprechende Information auch im integrierten Schaltkreis abgelegt werden. Die Speicherung dieser Informationen erfolgt vorzugsweise in verschlüsselter Form, die lediglich mit dem passenden Gegenschlüssel identifiziert werden kann. Bei einer Überprüfung des Wertdokuments wird die im integrierten Schaltkreis enthaltene Information mit der tatsächlich lesbar auf dem Dokument vorhandenen Information verglichen.

Erfolgt die Kommunikation mit dem integrierten Schaltkreis kontaktlos, so wird die Handhabung derartiger Dokumente relativ einfach und kann beispielsweise bei Warenlieferungen, Grenzübertritten und anderen Vorgängen, bei welchen Warenströme zusammen mit Dokumenten gehandhabt werden, eingesetzt werden, um eine nahezu lückenlose Kontrolle durchzuführen So können mit Hilfe der Erfindung beispielsweise Schmuggelvorgänge geprüft werden.

Wird als integrierter Schaltkreis ein Mikroprozessor verwendet, können zudem im integrierten Schaltkreis des Sicherheitspapiers bzw. Wertdokuments mit Hilfe entsprechender kryptographischer Verfahren verschlüsselte Informationen erzeugt und an ein Schreib-/Lesegerät übertragen werden. Auch beliebige andere Programme oder Multifunktionsstrukturen können verwendet werden. Hierbei können auf die bereits bekannten Techniken aus der Datenverarbeitung bzw. aus dem Gebiet der Chipkartentechnik zurückgegriffen werden.

Weitere Ausführungsbeispiele und Vorteile der Erfindung werden anhand der Figuren erläutert. Es wird darauf hingewiesen, dass die Figuren lediglich der Veranschaulichung dienen und keine maßstabsgetreue Wiedergabe der Erfindung darstellen.

Es zeigen:
Fig.1 ein erfindungsgemäßes Wertdokument,
Fig. 2, 4 und 5 verschiedene Ausführungsformen des erfindungsgemäßen Transfermaterials im Querschnitt,
Fig. 3 eine Variante eines Transfermaterials im Querschnitt, welches nicht Gegenstand der Erfindung ist,
Fig. 6a) bis 6e) verschiedene Ausführungsbeispiele für das erfindungsgemäße Koppelelement.

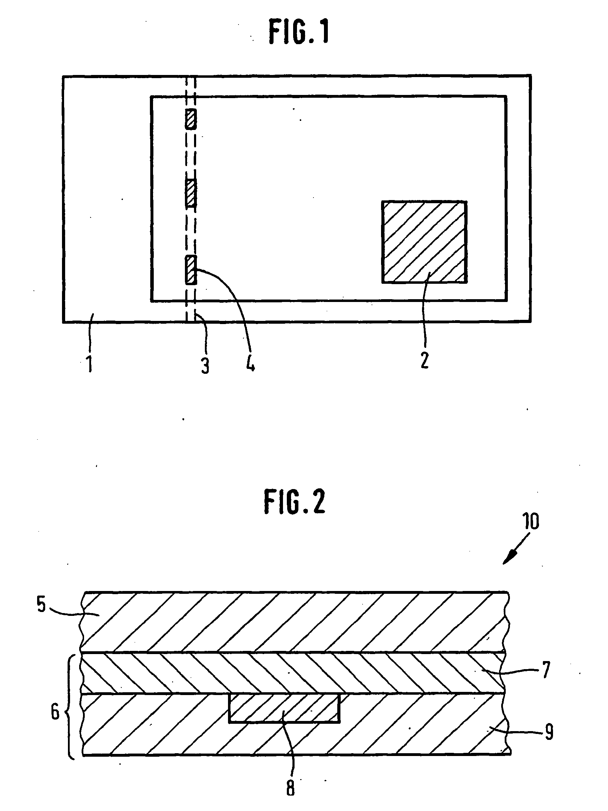

Fig. 1 zeigt eine Variante des erfindungsgemäßen Wertdokuments in Aufsicht. Im gezeigten Beispiel handelt es sich um eine Banknote 1, die aus dem erfindungsgemäßen Sicherheitspapier hergestellt wurde. Die Banknote trägt ein erfindungsgemäßes Sicherheitselement 2, das als Transferelement ausgeführt ist und unter Verwendung des im Folgenden noch näher zu erläuternden Transfermaterials aufgebracht wurde. Die Banknote 1 kann zusätzliche Sicherheitselemente, wie beispielsweise einen Sicherheitsfaden 3, aufweisen. Dieser Sicherheitsfaden 3 ist als sogenannter "Fenstersicherheitsfaden" quasi in das Papier eingewebt, so dass er in bestimmten Bereichen 4 an die Oberfläche der Banknote tritt.

Die Fig. 2, 4 und 5 zeigen verschiedene Ausführungsformen des erfindungsgemäßen Transfermaterials 10. Das Transfermaterial 10 besteht grundsätzlich aus einer Trägerschicht 5 und einer Übertragungslage 6, die zumindest bereichsweise auf das erfindungsgemäße Wertdokument übertragen wird. Im Falle des in Fig.1 gezeigten Sicherheitselements 2 wird die Übertragungslage 6 beispielsweise in Form eines Quadrats von der Trägerschicht 5 abgelöst. Die Trägerschicht 5 kann dabei mit einer Trennschicht versehen sein, um ein definiertes Ablösen der Übertragungslage zu gewährleisten. In den Figuren ist diese Trennschicht nicht dargestellt. Selbstverständlich sind auch beliebige andere Umrissformen bis hin zu filigranen Strukturen, wie Guillochen etc., möglich. Häufig werden die Sicherheitselemente 2 auch in Form von Streifen ausgebildet, die parallel zum Sicherheitsfaden 3 angeordnet sind.

Die in Fig. 2 gezeigte Übertragungslage 6 besteht aus einer den optischen Effekt erzeugenden Schicht 7, dem integrierten Schaltkreis 8 sowie einer Klebstoffschicht 9. Da der integrierte Schaltkreis 8 bereits ein integriertes Koppelelement aufweist, sind im Schichtaufbau der Übertragungslage 6 keine weiteren Schichten für die Kommunikation mit dem integrierten Schaltkreis vorzusehen. Die den optischen Effekt erzeugende Schciht 7 ist daher frei wählbar. Vorzugsweise ist sie jedoch zumindest im Bereich des integrierten Schaltkreises 8 opak, so dass der integrierte Schaltkreis 8 visuell nicht erkennbar ist.

Die den optischen Effekt erzeugende Schicht 7 ist hier vollflächig dargestellt und kann wiederum aus mehreren Schichten zusammengesetzt sein. Dies ist beispielsweise der Fall wenn es sich um ein Dünnschichtelement handelt, das aus mehreren dielektrischen Schichten mit unterschiedlichen Brechungsindices und dünnen Metallschichten zusammengesetzt sein kann. Ein derartiger Schichtaufbau erzeugt ein winkelabhängiges Farbwechselspiel.

Bei der Schicht 7 kann es sich auch um eine beliebige andere, einen optischen Effekt erzeugende Schicht, wie beispielsweise eine Druckschicht handeln, die spezielle, einen optisch variablen Effekt erzeugende Pigmente enthält. Hierfür werden vorzugsweise Flüssigkristallpigmente oder auch andere Interferenzeffekte ausnutzende Pigmente, wie beispielsweise IRIODINE^{®} der Firma Merck benutzt.

Die Klebstoffschicht 9 dient zur Befestigung des Sicherheitselements 2 am Wertdokument. Hierbei handelt es sich vorzugsweise um eine Heißschmelzkleberschicht, die mit Hilfe von entsprechend geformten Heißprägestempeln aktiviert wird. Die Klebstoffschicht 9 kann allerdings auch nur bereichsweise vorgesehen werden, um die Umrissform der zu übertragenden Transferelemente bereits auf dem Transfermaterial zu definieren. Gemäß einer weiteren Ausführungsform kann sie auch vollständig fehlen. In diesem Fall wird die Klebstoffschicht in der gewünschten Form auf das Substrat aufgebracht, das mit einem Transferelement versehen werden soll.

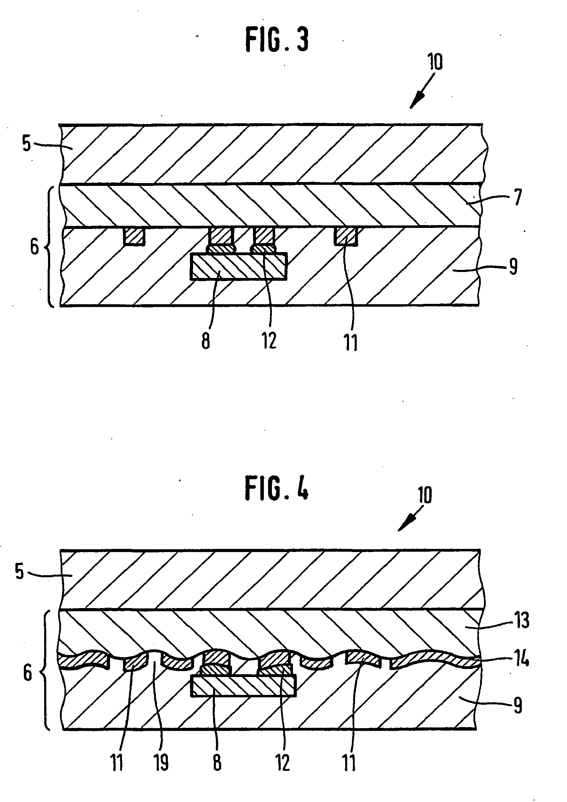

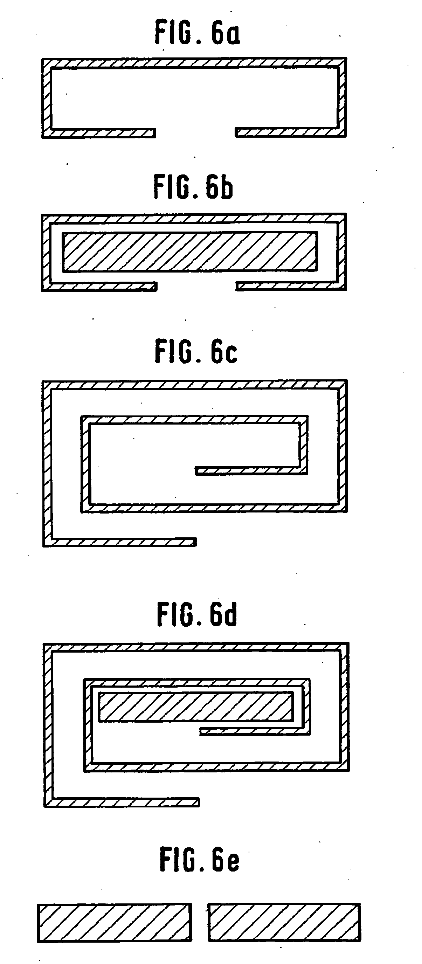

Das in Fig. 3 dargestellte Transfermaterial, welches nicht Gegenstand der Erfindung ist, ist mit einem integrierten Schaltkreis versehen, der kein integriertes Koppelelement aufweist. Die Übertragungslage 6 enthält daher neben der vollflächig aufgebrachten, einen optischen Effekt erzeugende Schicht 7 eine Metallschicht 11. Die Metallschicht 11 ist in Form eines Schleifendipols aufgebracht, wie er in Fig. 6a) dargestellt ist, und bildet das Koppelelement für den integrierten Schaltkreis 8. Die Verbindung zwischen den Anschlüssen des Schleifendipols 11 und den Kontaktflächen des integrierten Schaltkreises erfolgt über eine Leitkleberschicht 12.

Die in Fig. 4 dargestellte Übertragungslage 6 weist ein Hologramm auf, das aus einer Prägeschicht 13 und einer Metallschicht 14 besteht. Die Metallschicht 14 sorgt dafür, dass die reliefartig eingebrachten Beugungsstrukturen des Hologramms in Reflexion beobachtet werden können. Die Metallschicht 14 weist allerdings Lücken 19 auf. Die Lücken 19 sind so ausgebildet, dass das Koppelelement 11 für den integrierten Schaltkreis 8 entsteht. Wie in Fig. 3 wird das Koppelement von einem Schleifendipol gebildet, der durch die Lücken 19 von der übrigen Metallschicht 14 isoliert ist.

In diesem Beispiel ist die Metallschicht 14 gleichzeitig Teil der den optischen Effekt erzeugenden Schicht 7 wie auch des integrierten Schaltkreises 8. Das Koppelelement 11 ist allerdings in Aufsicht deutlich zu erkennen, wenn die Prägeschicht 13 transparent ausgeführt ist. Ist dieser Effekt nicht erwünscht, so kann die Prägeschicht 13 mit transluzenten Farben eingefärbt werden. Denkbar ist auch die Verwendung von nichtleitenden, metallisch wirkenden Pigmenten, die den optischen Eindruck des Koppelelements 12 verwischen.

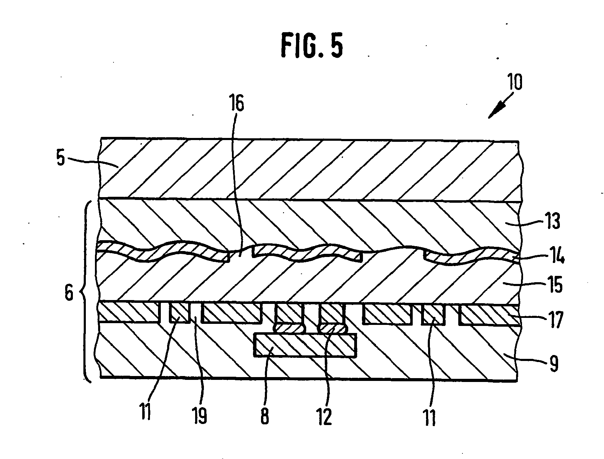

Die in Fig. 5 gezeigte Übertragungslage 6 zeigt ebenfalls ein Hologramm, das mit einem integrierten Schaltkreis kombiniert ist. Im vorliegenden Fall dient die Reflexionsschicht 14 der Beugungsstruktur nicht gleichzeitig als Kommunikationsschicht für den integrierten Schaltkreis 8. Vielmehr ist die Metallschicht 14 durch eine Isolationsschicht 15 von der das Koppelelement 11 aufweisenden Metallschicht 17 getrennt. Dennoch weist die Metallschicht 14 Aussparungen 16 in Form von Zeichen oder Mustern auf, die zumindest im Durchlicht gut lesbar sind. Diese Aussparungen bilden ein weiteres visuelles Echtheitsmerkmal.

Die das Koppelelement 11 enthaltende Metallschicht 17 ist analog zu der in Fig. 4 gezeigten Reflexionsschicht 14 aufgebaut. Das heißt, sie weist Lücken 19 auf, die das Koppelelement 11 von der übrigen Metallschicht isolieren.

Die Aussparungen 16 bzw. die Lücken 19 in den jeweiligen Metallschichten 14,17 können auf unterschiedliche Weise erzeugt werden. So können die Metallschichten beispielsweise mittels entsprechender Masken in der gewünschten Form direkt auf die jeweilige Schicht 13 bzw. 15 aufgedampft werden. Alternativ können die Metallschichten auch in einem ersten Schritt als vollflächige Metallschichten erzeugt werden, die anschließend in den gewünschten Bereichen mit einer Schutzschicht abgedeckt werden. Anschließend werden die nicht abgedeckten freien Bereiche mit Hilfe entsprechender Lösungsmittel entfernt. Diese entfernten Bereiche entsprechen den Aussparungen 16 bzw. Lücken 19.

Vorzugsweise wird jedoch ein Verfahren eingesetzt, bei welchem in einem ersten Schritt die Schicht 13 bzw. 15 in den Bereichen 16 bzw. 19 mit einer vorzugsweise wasserlöslichen Druckfarbe bedruckt werden. Anschließend wird eine vollflächige Metallisierung im Vakuumdampfverfahren aufgebracht. In einem letzten Schritt wird die lösliche Farbe und die darüber angeordnete Metallschicht mit einem entsprechenden Lösungsmittel entfernt, so dass die Aussparungen 16 bzw. Lücken 19 entstehen. Ebenso ist es möglich, für die Erzeugung der Aussparungen 16 ein anderes Verfahren zu verwenden als für die Erzeugung der Lücken 19.

Die gleichen Verfahren können selbstverständlich auch für die Erzeugung des Koppelelements 11, wie es in Fig. 3 gezeigt ist, verwendet werden.

In Fig. 6 sind verschiedene Ausführungsformen des Koppelelements dargestellt. Gezeigt ist jeweils ausschließlich das Koppelelement, wie es beispielsweise in Fig. 3 verwendet wird. Auf eine Darstellung eventuell vorhandener weiterer metallischer Umgebungen, wie in Fig. 4 und 5 dargestellt, wurde aus Gründen der Übersichtlichkeit verzichtet.

Fig. 6a) zeigt einen Schleifendipol, der, wie in Fig. 6b) gezeigt, zusätzlich mit einem metallischen Kern versehen sein kann, um die Leistung des Systems zu erhöhen. Alternativ kann das Koppelelement auch als Spule mit einer entsprechenden Anzahl von Windungen bzw. mit einem metallischen Kern ausgeführt sein, wie in den Fig. 6c) und 6d) dargestellt. Eine weitere kapazitiv ansprechbare Variante ist in Fig. 6e) dargestellt. Die beiden metallischen Balken wirken hier als offener Dipol. Diese Formen von Koppelelementen können im Wesentlichen in allen gezeigten und beschriebenen Ausführungsbeispielen eingesetzt werden, wobei in der Ausführungsform nach Fig. 4 lediglich ein Schleifendipol oder eine Spule verwendet wird.

Wie bereits erläutert, werden diese Koppelelemente durch eine entsprechende Metallisierung bzw. Demetallisierung dargestellt. Gemäß einer Variante, die nicht Gegenstand der Erfindung ist, können sie jedoch auch mit Hilfe leitfähiger Polymere drucktechnisch erzeugt werden.

Die in den Fig. 2 bis 5 gezeigten Schichtaufbauten des Transfermaterials 10 können analog auf einen Sicherheitsfaden übertragen werden. In diesem Fall wird die Trägerschicht 5 durch eine Kunststofffolie ersetzt, die unlösbar mit dem auf ihr angeordneten Schichtaufbau verbunden ist. Der Schichtaufbau entspricht hierbei den dargestellten Übertragungslagen 6. Dieser Sicherheitsfaden kann analog zu dem in Fig. 1 gezeigten Sicherheitsfaden 3 in das Sicherheitspapier eingewebt werden. Alternativ kann der Sicherheitsfaden jedoch auch vollständig an der Oberfläche des Sicherheitspapiers bzw. Wertdokuments angeordnet werden. Hierfür wird die dem Schichtaufbau gegenüberliegende Oberfläche des Kunststoffträgers mit einem entsprechenden Klebstoff beschichtet. Analog ist es möglich, das Sicherheitselement als selbsttragendes Haftetikett mit beliebiger Umrissform herzustellen

## Patentansprüche

1. Sicherheitspapier für die Herstellung von Wertdokumenten, wie Banknoten, Urkunden, etc., mit wenigstens einem mehrschichtigen Sicherheitselement, das wenigstens einen visuell prüfbaren optischen Effekt aufweist, wobei das Sicherheitselement zumindest teilweise auf der Oberfläche des Sicherheitspapieres angeordnet ist, wobei das Sicherheitselement wenigstens einen integrierten Schaltkreis aufweist, wobei die Energieversorgung des integrierten Schaltkreises kontaktlos über ein Koppelelement erfolgt, **dadurch gekennzeichnet, dass** das Koppelelement ein Teil des integrierten Schaltkreises ist.

2. Sicherheitspapier für die Herstellung von Wertdokumenten, wie Banknoten, Urkunden, etc., mit wenigstens einem mehrschichtigen Sicherheitselement, das wenigstens einen visuell prüfbaren optischen Effekt aufweist, wobei das Sicherheitselement zumindest teilweise auf der Oberfläche des Sicherheitspapieres angeordnet ist, wobei das Sicherheitselement wenigstens einen integrierten Schaltkreis aufweist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, **dadurch gekennzeichnet, dass** die metallische Schicht von den den optischen Effekt erzeugenden Schichten durch eine Isolationsschicht getrennt ist.

3. Sicherheitspapier für die Herstellung von Wertdokumenten, wie Banknoten, Urkunden, etc., mit wenigstens einem mehrschichtigen Sicherheitselement, das wenigstens einen visuell prüfbaren optischen Effekt aufweist, wobei das Sicherheitselement zumindest teilweise auf der Oberfläche des Sicherheitspapieres angeordnet ist, wobei das Sicherheitselement wenigstens einen integrierten Schaltkreis aufweist, wobei der integrierte Schaltkreis zwischen den den optischen Effekt aufweisenden Schichten und dem Sicherheitspapier angeordnet ist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, und wobei die metallische Schicht zugleich eine der den optischen Effekt erzeugenden Schichten ist, **dadurch gekennzeichnet, dass** das Koppelelement ein Schleifendipol oder eine Spule ist.

4. Sicherheitspapier nach Anspruch 3, **dadurch gekennzeichnet, dass** der Schleifendipol oder die Spule eine metallisierte Kernzone aufweist.

5. Sicherheitspapier nach einem der Ansprüche 2 bis 4, **dadurch gekennzeichnet, dass** der integrierte Schaltkreis mit dem Koppelelement verbunden ist.

6. Sicherheitspapier nach einem der Ansprüche 1 bis 5, **dadurch gekennzeichnet, dass** das Sicherheitselement einen optisch variablen Effekt zeigt, bei dem das Sicherheitselement unter unterschiedlichen Betrachtungswinkeln unterschiedliche visuelle Eindrücke erzeugt.

7. Sicherheitspapier nach einem der Ansprüche 1 bis 6, **dadurch gekennzeichnet, dass** das Sicherheitselement wenigstens eine Schicht aufweist, in der optisch variable Pigmente, insbesondere Interferenzschicht- oder Flüssigkristallpigmente enthalten sind.

8. Sicherheitspapier nach wenigstens einem der Ansprüche 1 bis 7, **dadurch gekennzeichnet, dass** das Sicherheitselement wenigstens eine Schicht aufweist, in der Beugungsstrukturen in Form einer Reliefstruktur vorliegen.

9. Sicherheitspapier nach Anspruch 8, **dadurch gekennzeichnet, dass** die Beugungsstrukturen zumindest bereichsweise mit einer Reflexionsschicht, insbesondere mit einer Metallschicht oder einer dielektrischen Schicht mit hohem Brechungsindex, kombiniert sind.

10. Sicherheitspapier nach wenigstens einem der Ansprüche 1 bis 9, **dadurch gekennzeichnet, dass** das Sicherheitselement wenigstens eine metallische und eine dielektrische Schicht oder wenigstens zwei dielektrische Schichten mit unterschiedlichem Brechungsindex aufweist, wobei die Schichten so zusammenwirken, dass bei Betrachtung in Reflexion unter verschiedenen Betrachtungswinkeln unterschiedliche visuelle Eindrücke entstehen.

11. Sicherheitspapier nach wenigstens einem der Ansprüche 1 bis 10, **dadurch gekennzeichnet, dass** der integrierte Schaltkreis zwischen den den optischen Effekt aufweisenden Schichten und dem Sicherheitspapier angeordnet ist.

12. Sicherheitspapier nach wenigstens einem der Ansprüche 1 bis 11, **dadurch gekennzeichnet, dass** der integrierte Schaltkreis ein Speicherchip oder ein Mikroprozessorchip ist.

13. Sicherheitspapier nach wenigstens einem der Ansprüche 1 bis 12, **dadurch gekennzeichnet, dass** das Sicherheitselement ein Transferelement oder ein Etikett ist, das vollständig auf der Oberfläche des Sicherheitspapiers angeordnet ist.

14. Sicherheitspapier nach Anspruch 13, **dadurch gekennzeichnet, dass** das Sicherheitselement die Form eines Streifens aufweist.

15. Sicherheitspapier nach wenigstens einem der Ansprüche 1 bis 12, **dadurch gekennzeichnet, dass** das Sicherheitselement ein Sicherheitsfaden ist.

16. Sicherheitspapier nach wenigstens einem der Ansprüche 1 bis 14, **dadurch gekennzeichnet, dass** das Koppelelement eine Fläche von mindestens 20 mm² einnimmt.

17. Sicherheitspapier nach wenigstens einem der Ansprüche 1 bis 16, **dadurch gekennzeichnet, dass** das Sicherheitselement derart mit dem Sicherheitspapier verbunden ist, dass sie nicht zerstörungsfrei getrennt werden können.

18. Wertdokument mit wenigstens einem mehrschichtigen Sicherheitselement, das wenigstens einen visuell prüfbaren optischen Effekt aufweist, wobei das Sicherheitselement vollständig auf der Oberfläche des Wertdokuments angeordnet ist, wobei das Sicherheitselement wenigstens einen integrierten Schaltkreis aufweist, wobei die Energieversorgung des integrierten Schaltkreises kontaktlos über ein Koppelelement erfolgt, **dadurch gekennzeichnet, dass** das Koppelelement ein Teil des integrierten Schaltkreises ist.

19. Wertdokument mit wenigstens einem mehrschichtigen Sicherheitselement, das wenigstens einen visuell prüfbaren optischen Effekt aufweist, wobei das Sicherheitselement vollständig auf der Oberfläche des Wertdokuments angeordnet ist, wobei das Sicherheitselement wenigstens einen integrierten Schaltkreis aufweist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, **dadurch gekennzeichnet, dass** die metallische Schicht von den den optischen Effekt erzeugenden Schichten durch eine Isolationsschicht getrennt ist.

20. Wertdokument mit wenigstens einem mehrschichtigen Sicherheitselement, das wenigstens einen visuell prüfbaren optischen Effekt aufweist, wobei das Sicherheitselement vollständig auf der Oberfläche des Wertdokuments angeordnet ist, wobei das Sicherheitselement wenigstens einen integrierten Schaltkreis aufweist, wobei der integrierte Schaltkreis zwischen den den optischen Effekt aufweisenden Schichten und dem Wertdokument angeordnet ist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, und wobei die metallische Schicht zugleich eine der den optischen Effekt erzeugenden Schichten ist, **dadurch gekennzeichnet, dass** das Koppelelement ein Schleifendipol oder eine Spule ist.

21. Wertdokument nach Anspruch 18, **dadurch gekennzeichnet, dass** das Wertdokument ein Sicherheitspapier nach Anspruch 1 oder einem der Ansprüche 6 bis 17, jeweils abhängig von Anspruch 1, aufweist.

22. Wertdokument nach Anspruch 19, **dadurch gekennzeichnet, dass** das Wertdokument ein Sicherheitspapier nach Anspruch 2 oder einem der Ansprüche 5 bis 17, jeweils abhängig von Anspruch 2, aufweist.

23. Wertdokument nach Anspruch 20, **dadurch gekennzeichnet, dass** das Wertdokument ein Sicherheitspapier nach Anspruch 3 oder einem der Ansprüche 4 bis 17, jeweils abhängig von Anspruch 3, aufweist.

24. Wertdokument nach einem der Ansprüche 21 bis 23, **dadurch gekennzeichnet, dass** das Wertdokument ein Pass, eine Banknote oder eine Kreditkarte ist.

25. Wertdokument nach wenigstens einem der Ansprüche 18 bis 24, **dadurch gekennzeichnet, dass** das Wertdokument zumindest überlappend zum Sicherheitselement einen Aufdruck, insbesondere einen Stichtiefdruck aufweist.

26. Mehrschichtiges Sicherheitselement zur Aufbringung auf ein Wertdokument, wobei das Sicherheitselement wenigstens einen visuell prüfbaren, optischen Effekt aufweist, wobei das Sicherheitselement wenigstens einen integrierten Schaltkreis aufweist, wobei die Energieversorgung des integrierten Schaltkreises kontaktlos über ein Koppelelement erfolgt, **dadurch gekennzeichnet, dass** das Koppelelement ein Teil des integrierten Schaltkreises ist.

27. Mehrschichtiges Sicherheitselement zur Aufbringung auf ein Wertdokument, wobei das Sicherheitselement wenigstens einen visuell prüfbaren, optischen Effekt aufweist, wobei das Sicherheitselement wenigstens einen integrierten Schaltkreis aufweist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in oder das Koppelelement ausgebildet ist, **dadurch gekennzeichnet, dass** die metallische Schicht von den den optischen Effekt erzeugenden Schichten durch eine Isolationsschicht getrennt ist.

28. Mehrschichtiges Sicherheitselement zur Aufbringung auf ein Wertdokument, wobei das Sicherheitselement wenigstens einen visuell prüfbaren, optischen Effekt aufweist, wobei das Sicherheitselement wenigstens einen integrierten Schaltkreis aufweist, wobei der integrierte Schaltkreis im Innern des Sicherheitselements angeordnet ist und von den den optischen Effekt erzeugenden Schichten verdeckt wird, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, und wobei die metallische Schicht zugleich eine der den optischen Effekt erzeugenden Schichten ist, **dadurch gekennzeichnet, dass** das Koppelelement ein Schleifendipol oder eine Spule ist.

29. Transfermaterial zur Aufbringung eines mehrschichtigen Sicherheitselements auf ein Wertdokument, wobei das Transfermaterial eine Trägerschicht aufweist, auf der der Schichtaufbau des Sicherheitselements lösbar aufgebracht ist und wobei das Sicherheitselement wenigstens einen visuell prüfbaren optischen Effekt aufweist, wobei der Schichtaufbau des Sicherheitselements wenigstens einen integrierten Schaltkreis aufweist, wobei die Energieversorgung des integrierten Schaltkreises kontaktlos über ein Koppelelement erfolgt, **dadurch gekennzeichnet, dass** das Koppelelement ein Teil des integrierten Schaltkreises ist.

30. Transfermaterial zur Aufbringung eines mehrschichtigen Sicherheitselements auf ein Wertdokument, wobei das Transfermaterial eine Trägerschicht aufweist, auf der der Schichtaufbau des Sicherheitselements lösbar aufgebracht ist und wobei das Sicherheitselement wenigstens einen visuell prüfbaren optischen Effekt aufweist, wobei der Schichtaufbau des Sicherheitselements wenigstens einen integrierten Schaltkreis aufweist, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, **dadurch gekennzeichnet, dass** die metallische Schicht von den den optischen Effekt erzeugenden Schichten durch eine Isolationsschicht getrennt ist.

31. Transfermaterial zur Aufbringung eines mehrschichtigen Sicherheitselements auf ein Wertdokument, wobei das Transfermaterial eine Trägerschicht aufweist, auf der der Schichtaufbau des Sicherheitselements lösbar aufgebracht ist und wobei das Sicherheitselement wenigstens einen visuell prüfbaren optischen Effekt aufweist, wobei der Schichtaufbau des Sicherheitselements wenigstens einen integrierten Schaltkreis aufweist, wobei der integrierte Schaltkreis im Innern des Sicherheitselements angeordnet ist und von den den optischen Effekt erzeugenden Schichten verdeckt wird, wobei die Energieversorgung des integrierten Schaltkreises kontaktlos über ein Koppelelement erfolgt, wobei das Koppelelement in einer Schicht des Sicherheitselements angeordnet ist, wobei das Sicherheitselement wenigstens eine metallische Schicht aufweist, in der das Koppelelement ausgebildet ist, und wobei die metallische Schicht zugleich eine der den optischen Effekt erzeugenden Schichten ist, **dadurch gekennzeichnet, dass** das Koppelelement ein Schleifendipol oder eine Spule ist.

32. Transfermaterial nach Anspruch 30 oder 31, **dadurch gekennzeichnet, dass** das Transfermaterial folgenden Schichtaufbau aufweist:
- eine Trägerschicht,
- eine Schicht, in der Beugungsstrukturen in Form einer Reliefstruktur vorliegen,
- eine Metallschicht, in der ein Koppelelement ausgebildet ist,
- einen integrierten Schaltkreis und
- eine Heißschmelzkleberschicht.

33. Transfermaterial nach Anspruch 30, **dadurch gekennzeichnet, dass** das Transfermaterial folgenden Schichtaufbau aufweist:
- eine Trägerschicht,
- eine Schicht, in der Beugungsstrukturen in Form einer Reliefstruktur vorliegen,
- eine Reflexionsschicht, die es ermöglicht, die Beugungsstrukturen in Reflexion zu beobachten,
- eine Isolationsschicht,
- eine Metallschicht, in der ein Koppelelement ausgebildet ist,
- einen integrierten Schaltkreis und
- eine Heißschmelzkleberschicht.

34. Transfermaterial nach Anspruch 32 oder 33, **dadurch gekennzeichnet, dass** der integrierte Schaltkreis über eine leitfähige Kleberschicht mit dem Koppelelement verbunden ist.

35. Transfermaterial nach Anspruch 34, **dadurch gekennzeichnet, dass** die leitfähige Kleberschicht eine Leitsilberschicht oder eine anisotrope Leitkleberschicht ist.

36. Transfermaterial nach einem der Ansprüche 29 bis 35, **dadurch gekennzeichnet, dass** die den optischen Effekt erzeugende Schicht eine Druckschicht ist, in der optisch variable Pigmente, insbesondere Interferenzschicht- oder Flüssigkristallpigmente, enthalten sind.

37. Transfermaterial nach wenigstens einem der Ansprüche 29 bis 36, **dadurch gekennzeichnet, dass** der integrierte Schaltkreis ein Speicherchip oder ein Mikroprozessorchip ist.

38. Transfermaterial nach wenigstens einem der Ansprüche 29 bis 37, **dadurch gekennzeichnet, dass** die Übertragungslage des Transfermaterials als nicht selbsttragende Folie ausgebildet ist.

39. Verfahren zur Herstellung eines Transfermaterials für die Aufbringung eines mehrschichtigen Sicherheitselements auf ein Wertdokument, wobei das Transfermaterial eine Trägerschicht aufweist, auf der der Schichtaufbau des Sicherheitselements lösbar vorbereitet wird, und wobei das Sicherheitselement wenigstens einen visuell prüfbaren optischen Effekt aufweist, wobei in den Schichtaufbau des Sicherheitselements wenigstens ein integrierten Schaltkreis eingebracht wird, wobei die Energieversorgung des integrierten Schaltkreises kontaktlos über ein Koppelelement erfolgt, **dadurch gekennzeichnet, dass** das Koppelelement ein Teil des integrierten Schaltkreises ist.

40. Verfahren zur Herstellung eines Transfermaterials für die Aufbringung eines mehrschichtigen Sicherheitselements auf ein Wertdokument, wobei das Transfermaterial eine Trägerschicht aufweist, auf der der Schichtaufbau des Sicherheitselements lösbar vorbereitet wird, und wobei das Sicherheitselement wenigstens einen visuell prüfbaren optischen Effekt aufweist, wobei in den Schichtaufbau des Sicherheitselements wenigstens ein integrierten Schaltkreis eingebracht wird, wobei die Energieversorgung des integrierten Schaltkreises kontaktlos über ein Koppelelement erfolgt, wobei das Koppelelement in einer Schicht des Sicherheitselements angeordnet wird, wobei das Sicherheitselement wenigstens eine metallische Schicht aufweist, in der das Koppelelement ausgebildet wird, **dadurch gekennzeichnet, dass** die metallische Schicht von den den optischen Effekt erzeugenden Schichten durch eine Isolationsschicht getrennt wird.

41. Verfahren zur Herstellung eines Transfermaterials für die Aufbringung eines mehrschichtigen Sicherheitselements auf ein Wertdokument, wobei das Transfermaterial eine Trägerschicht aufweist, auf der der Schichtaufbau des Sicherheitselements lösbar vorbereitet wird, und wobei das Sicherheitselement wenigstens einen visuell prüfbaren optischen Effekt aufweist, wobei in den Schichtaufbau des Sicherheitselements wenigstens ein integrierten Schaltkreis eingebracht wird, wobei der integrierte Schaltkreis im Innern des Sicherheitselements angeordnet wird und von den den optischen Effekt erzeugenden Schichten verdeckt wird, wobei die Energieversorgung des integrierten Schaltkreises kontaktlos über ein Koppelelement erfolgt, wobei das Koppelelement in einer Schicht des Sicherheitselements angeordnet wird, wobei das Sicherheitselement wenigstens eine metallische Schicht aufweist, in der das Koppelelement ausgebildet wird, und wobei die metallische Schicht zugleich eine der den optischen Effekt erzeugenden Schichten ist, **dadurch gekennzeichnet, dass** das Koppelelement ein Schleifendipol oder eine Spule ist.

42. Verfahren nach Anspruch 40 oder 41, **gekennzeichnet durch** folgende Schritte:
a) Bereitstellen einer Trägerschicht,
b) Aufbringen wenigstens einer einen optischen Effekt erzeugenden Schicht,
c) Aufdampfen einer metallischen Schicht, wobei in der metallischen Schicht ein Koppelelement ausgebildet wird,
d) Aufbringen eines integrierten Schaltkreises.

43. Verfahren nach Anspruch 40 und Anspruch 42, **dadurch gekennzeichnet, dass** zwischen den den optischen Effekt erzeugenden Schichten und die in Schritt c) aufzubringende Metallschicht eine Isolationsschicht angeordnet wird.

44. Verfahren nach Anspruch 39 oder 40, **dadurch gekennzeichnet, dass** vor Schritt c) eine lösliche Farbe in Form des Koppelelements und eventueller weiterer Muster oder Zeichen aufgedruckt wird, und dass nach Schritt c) diese Druckfarbe zusammen mit der metallischen Schicht entfernt wird.

45. Verfahren nach einem der Ansprüche 42 bis 44, **dadurch gekennzeichnet, dass** der integrierte Schaltkreis und das Koppelelement über eine Leitsilberschicht oder eine anisotrope Leitkleberschicht miteinander verbunden werden.

46. Verfahren nach wenigstens einem der Ansprüche 42 bis 45, **dadurch gekennzeichnet, dass** in Schritt b) eine Schicht aufgebracht wird, in die anschließend Beugungsstrukturen in Form einer Reliefstruktur eingeprägt werden.

47. Verfahren nach Anspruch 46, **dadurch gekennzeichnet, dass** in Schritt c) eine UV-härtbare Lackschicht aufgebracht, die während des Prägevorgangs gehärtet wird.

48. Verfahren nach Anspruch 46 oder 47, **dadurch gekennzeichnet, dass** in Schritt b) auf die geprägte Schicht zumindest bereichsweise eine Reflexionsschicht aufgebracht wird.

49. Verfahren nach wenigstens einem der Ansprüche 42 bis 45, **dadurch gekennzeichnet, dass** in Schritt b) wenigstens eine metallische und eine dielektrische Schicht oder wenigstens zwei dielektrische Schichten mit unterschiedlichem Brechungsindex aufgebracht werden, wobei die Schichten so zusammenwirken, dass bei Betrachtung in Reflexion unter verschiedenen Betrachtungswinkeln unterschiedliche visuelle Eindrücke entstehen.

50. Verfahren nach wenigstens einem der Ansprüche 42 bis 49, **dadurch gekennzeichnet, dass** in einem Schritt e) eine Kleberschicht, vorzugsweise eine Heißschmelzkleberschicht aufgebracht wird.

51. Verfahren zur Herstellung eines Wertdokuments mit einem Sicherheitselement, **dadurch gekennzeichnet, dass** auf das Wertdokument bereichsweise der Schichtaufbau des Transfermaterials gemäß wenigstens eines der Ansprüche 29 bis 38 übertragen und die Trägerschicht anschließend abgezogen wird.

52. Verwendung des Transfermaterials gemäß wenigstens einem der Ansprüche 29 bis 38 für die Herstellung von Sicherheitselementen.

53. Verwendung des Sicherheitspapiers gemäß wenigstens einem der Ansprüche 1 bis 17 für die Absicherung von Produkten.

54. Verwendung des Wertdokuments gemäß wenigstens einem der Ansprüche 18 bis 25 für die Absicherung von Produkten.

## Claims

1. A security paper for producing value documents, such as bank notes, certificates, etc., with at least one multilayer security element having at least one visually checkable optical effect, the security element being disposed at least partly on the surface of the security paper, the security element having at least one integrated circuit, the energy supply for the integrated circuit being effected contactlessly via a coupling element, **characterized in that** the coupling element is part of the integrated circuit.

2. A security paper for producing value documents, such as bank notes, certificates, etc., with at least one multilayer security element having at least one visually checkable optical effect, the security element being disposed at least partly on the surface of the security paper, the security element having at least one integrated circuit, the energy supply for the integrated circuit being effected contactlessly via a coupling element, the coupling element being disposed in a layer of the security element, the security element having at least one metallic layer in which the coupling element is formed, **characterized in that** the metallic layer is separated from the layers producing the optical effect by an insulating layer.

3. A security paper for producing value documents, such as bank notes, certificates, etc., with at least one multilayer security element having at least one visually checkable optical effect, the security element being disposed at least partly on the surface of the security paper, the security element having at least one integrated circuit, the integrated circuit being disposed between the layers having the optical effect and the security paper, the energy supply for the integrated circuit being effected contactlessly via a coupling element, the coupling element being disposed in a layer of the security element, the security element having at least one metallic layer in which the coupling element is formed, and the metallic layer at the same time being one of the layers producing the optical effect, **characterized in that** the coupling element is a folded dipole or a coil.

4. The security paper according to claim 3, **characterized in that** the folded dipole or the coil has a metalized core zone.

5. The security paper according to any of claims 2 to 4, **characterized in that** the integrated circuit is connected with the coupling element.

6. The security paper according to any of claims 1 to 5, **characterized in that** the security element shows an optically variable effect whereby the security element produces different visual impressions at different viewing angles.

7. The security paper according to any of claims 1 to 6, **characterized in that** the security element has at least one layer containing optically variable pigments, in particular interference-layer or liquid-crystal pigments.

8. The security paper according to at least one of claims 1 to 7, **characterized in that** the security element has at least one layer in which diffraction structures in the form of a relief structure are present.

9. The security paper according to claim 8, **characterized in that** the diffraction structures are combined at least in certain areas with a reflecting layer, in particular a metal layer or a dielectric layer with a high refractive index.

10. The security paper according to at least one of claims 1 to 9, **characterized in that** the security element has at least a metallic and a dielectric layer or at least two dielectric layers with different refractive indexes, the layers cooperating so that different visual impressions arise when viewed in reflected light at different viewing angles.

11. The security paper according to at least one of claims 1 to 10, **characterized in that** the integrated circuit is disposed between the layers having the optical effect and the security paper.

12. The security paper according to at least one of claims 1 to 11, **characterized in that** the integrated circuit is a memory chip or a microprocessor chip.

13. The security paper according to at least one of claims 1 to 12, **characterized in that** the security element is a transfer element or a label disposed completely on the surface of the security paper.

14. The security paper according to claim 13, **characterized in that** the security element has the form of a strip.

15. The security paper according to at least one of claims 1 to 12, **characterized in that** the security element is a security thread.

16. The security paper according to at least one of claims 1 to 14, **characterized in that** the coupling element occupies an area of at least 20 square millimeters.

17. The security paper according to at least one of claims 1 to 16, **characterized in that** the security element is so connected with the security paper that they cannot be separated nondestructively.

18. A value document with at least one multilayer security element having at least one visually checkable optical effect, the security element being disposed completely on the surface of the value document, the security element having at least one integrated circuit, the energy supply for the integrated circuit being effected contactlessly via a coupling element, **characterized in that** the coupling element is part of the integrated circuit.

19. A value document with at least one multilayer security element having at least one visually checkable optical effect, the security element being disposed completely on the surface of the value document, the security element having at least one integrated circuit, the energy supply for the integrated circuit being effected contactlessly via a coupling element, the coupling element being disposed in a layer of the security element, the security element having at least one metallic layer in which the coupling element is formed, **characterized in that** the metallic layer is separated from the layers producing the optical effect by an insulating layer.

20. A value document with at least one multilayer security element having at least one visually checkable optical effect, the security element being disposed completely on the surface of the value document, the security element having at least one integrated circuit, the integrated circuit being disposed between the layers having the optical effect and the value document, the energy supply for the integrated circuit being effected contactlessly via a coupling element, the coupling element being disposed in a layer of the security element, the security element having at least one metallic layer in which the coupling element is formed, and the metallic layer at the same time being one of the layers producing the optical effect, **characterized in that** the coupling element is a folded dipole or a coil.

21. The value document according to claim 18, **characterized in that** the value document comprises a security paper according to claim 1 or any of claims 6 to 17, respectively dependent on claim 1.

22. The value document according to claim 19, **characterized in that** the value document comprises a security paper according to claim 2 or any of claims 5 to 17, respectively dependent on claim 2.

23. The value document according to claim 20, **characterized in that** the value document comprises a security paper according to claim 3 or any of claims 4 to 17, respectively dependent on claim 3.

24. The value document according to any of claims 21 to 23, **characterized in that** the value document a passport, a bank note or a credit card.

25. The value document according to at least one of claims 18 to 24, **characterized in that** the value document has a print, in particular an intaglio print, at least overlapping with the security element.

26. A multilayer security element for application to a value document, the security element having at least one visually checkable optical effect, the security element having at least one integrated circuit, the energy supply for the integrated circuit being effected contactlessly via a coupling element, **characterized in that** the coupling element is part of the integrated circuit.

27. A multilayer security element for application to a value document, the security element having at least one visually checkable optical effect, the security element having at least one integrated circuit, the energy supply for the integrated circuit being effected contactlessly via a coupling element, the coupling element being disposed in a layer of the security element, the security element having at least one metallic layer in which the coupling element is formed, **characterized in that** the metallic layer is separated from the layers producing the optical effect by an insulating layer.

28. A multilayer security element for application to a value document, the security element having at least one visually checkable optical effect, the security element having at least one integrated circuit, the integrated circuit being disposed in the interior of the security element and being covered by the layers producing the optical effect, the energy supply for the integrated circuit being effected contactlessly via a coupling element, the coupling element being disposed in a layer of the security element, the security element having at least one metallic layer in which the coupling element is formed, and the metallic layer at the same time being one of the layers producing the optical effect, **characterized in that** the coupling element is a folded dipole or a coil.

29. A transfer material for applying a multilayer security element to a value document, the transfer material having a carrier layer to which the layer structure of the security element is detachably applied, and the security element having at least one visually checkable optical effect, the layer structure of the security element having at least one integrated circuit, the energy supply for the integrated circuit being effected contactlessly via a coupling element, **characterized in that** the coupling element is part of the integrated circuit.

30. A transfer material for applying a multilayer security element to a value document, the transfer material having a carrier layer to which the layer structure of the security element is detachably applied, and the security element having at least one visually checkable optical effect, the layer structure of the security element having at least one integrated circuit, the energy supply for the integrated circuit being effected contactlessly via a coupling element, the coupling element being disposed in a layer of the security element, the security element having at least one metallic layer in which the coupling element is formed, **characterized in that** the metallic layer is separated from the layers producing the optical effect by an insulating layer.

31. A transfer material for applying a multilayer security element to a value document, the transfer material having a carrier layer to which the layer structure of the security element is detachably applied, and the security element having at least one visually checkable optical effect, the layer structure of the security element having at least one integrated circuit, the integrated circuit being disposed in the interior of the security element and being covered by the layers producing the optical effect, the energy supply for the integrated circuit being effected contactlessly via a coupling element, the coupling element being disposed in a layer of the security element, the security element having at least one metallic layer in which the coupling element is formed, and the metallic layer at the same time being one of the layers producing the optical effect, **characterized in that** the coupling element is a folded dipole or a coil.

32. The transfer material according to claim 30 or 31, **characterized in that** the transfer material has the following layer structure:
- a carrier layer,
- a layer in which diffraction structures in the form of a relief structure are present,
- a metal layer in which a coupling element is formed,
- an integrated circuit, and
- a hot-melt adhesive layer.

33. The transfer material according to claim 30, **characterized in that** the transfer material has the following layer structure:
- a carrier layer,
- a layer in which diffraction structures in the form of a relief structure are present,
- a reflecting layer permitting the diffraction structures to be observed in reflected light,
- an insulating layer,
- a metal layer in which a coupling element is formed,
- an integrated circuit, and
- a hot-melt adhesive layer.

34. The transfer material according to claim 32 or 33, **characterized in that** the integrated circuit is connected with the coupling element via a conductive adhesive layer.

35. The transfer material according to claim 34, **characterized in that** the conductive adhesive layer is a conductive silver layer or an anisotropic conductive adhesive layer.

36. The transfer material according to any of claims 29 to 35, **characterized in that** the layer producing the optical effect is a printed layer containing optically variable pigments, in particular interference-layer or liquid-crystal pigments.

37. The transfer material according to at least one of claims 29 to 36, **characterized in that** the integrated circuit is a memory chip or a microprocessor chip.

38. The transfer material according to at least one of claims 29 to 37, **characterized in that** the transfer layer of the transfer material is formed as a non-self-supporting foil.

39. A method for producing a transfer material for applying a multilayer security element to a value document, the transfer material having a carrier layer on which the layer structure of the security element is detachably prepared, and the security element having at least one visually checkable optical effect, at least one integrated circuit being incorporated into the layer structure of the security element, the energy supply for the integrated circuit being effected contactlessly via a coupling element, **characterized in that** the coupling element is part of the integrated circuit.

40. A method for producing a transfer material for applying a multilayer security element to a value document, the transfer material having a carrier layer on which the layer structure of the security element is detachably prepared, and the security element having at least one visually checkable optical effect, at least one integrated circuit being incorporated into the layer structure of the security element, the energy supply for the integrated circuit being effected contactlessly via a coupling element, the coupling element being disposed in a layer of the security element, the security element having at least one metallic layer in which the coupling element is formed, **characterized in that** the metallic layer is separated from the layers producing the optical effect by an insulating layer.

41. A method for producing a transfer material for applying a multilayer security element to a value document, the transfer material having a carrier layer on which the layer structure of the security element is detachably prepared, and the security element having at least one visually checkable optical effect, at least one integrated circuit being incorporated into the layer structure of the security element, the integrated circuit being disposed in the interior of the security element and being covered by the layers producing the optical effect, the energy supply for the integrated circuit being effected contactlessly via a coupling element, the coupling element being disposed in a layer of the security element, the security element having at least one metallic layer in which the coupling element is formed, and the metallic layer at the same time being one of the layers producing the optical effect, **characterized in that** the coupling element is a folded dipole or a coil.

42. The method according to claim 40 or 41, **characterized by** the following steps:
a) providing a carrier layer,
b) applying at least one layer producing an optical effect,
c) vapor-depositing a metallic layer, a coupling element being formed in the metallic layer,
d) applying an integrated circuit.

43. The method according to claim 40 and claim 42, **characterized in that** an insulating layer is disposed between the layers producing the optical effect and the metal layer to be applied in step c).

44. The method according to claim 39 or 40, **characterized in that** before step c) a soluble ink is printed on in the form of the coupling element and any further patterns or characters, and that after step c) said ink is removed together with the metallic layer.

45. The method according to any of claims 42 to 44, **characterized in that** the integrated circuit and the coupling element are interconnected via a conductive silver layer or an anisotropic conductive adhesive layer.

46. The method according to at least one of claims 42 to 45, **characterized in that** in step b) a layer is applied into which diffraction structures in the form of a relief structure are then embossed.

47. The method according to claim 46, **characterized in that** in step c) a UV-curable lacquer layer is applied that is cured during the embossing operation.

48. The method according to claim 46 or 47, **characterized in that** in step b) a reflecting layer is applied to the embossed layer at least in certain areas.

49. The method according to at least one of claims 42 to 45, **characterized in that** in step b) at least a metallic and a dielectric layer or at least two dielectric layers with different refractive indexes are applied, the layers cooperating so that different visual impressions arise when viewed in reflected light at different viewing angles.

50. The method according to at least one of claims 42 to 49, **characterized in that** in a step e) an adhesive layer, preferably a hot-melt adhesive layer, is applied.

51. A method for producing a value document with a security element, **characterized in that** the layer structure of the transfer material according to at least one of claims 29 to 38 is transferred to the value document in certain areas and the carrier layer is then removed.

52. Use of the transfer material according to at least one of claims 29 to 38 for producing security elements.

53. Use of the security paper according to at least one of claims 1 to 17 for protecting products.

54. Use of the value document according to at least one of claims 18 to 25 for protecting products.

## Revendications

1. Papier de sécurité pour la production de documents fiduciaires tels que des billets de banque, des documents officiels, etc., avec au moins un élément de sécurité multicouches qui présente au moins un effet optique contrôlable visuellement, ledit élément de sécurité étant disposé au moins en partie sur la surface du papier de sécurité, dans lequel l'élément de sécurité présente au moins un circuit intégré, dans lequel l'alimentation en énergie du circuit intégré se fait sans contact par le biais d'un élément de couplage, **caractérisé en ce que** l'élément de couplage est une partie du circuit intégré.

2. Papier de sécurité pour la production de documents fiduciaires tels que des billets de banque, des documents officiels, etc., avec au moins un élément de sécurité multicouches qui présente au moins un effet optique contrôlable visuellement, ledit élément de sécurité étant disposé au moins en partie sur la surface du papier de sécurité, dans lequel l'élément de sécurité présente au moins un circuit intégré, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, **caractérisé en ce que** la couche métallique est séparée des couches produisant l'effet optique par une couche isolante.

3. Papier de sécurité pour la production de documents fiduciaires tels que des billets de banque, des documents officiels, etc., avec au moins un élément de sécurité multicouches qui présente au moins un effet optique contrôlable visuellement, ledit élément de sécurité étant disposé au moins en partie sur la surface du papier de sécurité, dans lequel l'élément de sécurité présente au moins un circuit intégré, dans lequel le circuit intégré est disposé entre les couches présentant l'effet optique et le papier de sécurité, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, et dans lequel la couche métallique est également l'une des couches produisant l'effet optique, **caractérisé en ce que** l'élément de couplage est un dipôle en boucle fermée ou une bobine.

4. Papier de sécurité selon la revendication 3, **caractérisé en ce que** le dipôle en boucle fermée ou la bobine présente une zone centrale métallisée.

5. Papier de sécurité selon l'une des revendications 2 à 4, **caractérisé en ce que** le circuit intégré est relié à l'élément de couplage.

6. Papier de sécurité selon l'une des revendications 1 à 5, **caractérisé en ce que** l'élément de sécurité présente un effet optiquement variable dans lequel l'élément de sécurité produit sous des angles d'observation différents des impressions visuelles différentes.

7. Papier de sécurité selon l'une des revendications 1 à 6, **caractérisé en ce que** l'élément de sécurité présente au moins une couche contenant des pigments optiquement variables, en particulier des pigments de couche d'interférence ou à cristaux liquides.

8. Papier de sécurité selon l'une au moins des revendications 1 à 7, **caractérisé en ce que** l'élément de sécurité présente au moins une couche dans laquelle sont présentes des structures de diffraction sous la forme d'une structure en relief.

9. Papier de sécurité selon la revendication 8, **caractérisé en ce que** les structures de diffraction sont combinées au moins par zones avec une couche réfléchissante, en particulier avec une couche métallique ou une couche diélectrique ayant un indice de réfraction élevé.

10. Papier de sécurité selon l'une au moins des revendications 1 à 9, **caractérisé en ce que** l'élément de sécurité présente au moins une couche métallique et une couche diélectrique ou au moins deux couches diélectriques ayant des indices de réfraction différents, les couches coopérant de façon à produire des impressions visuelles différentes lorsqu'elles sont observées en réflexion sous des angles d'observation différents.

11. Papier de sécurité selon l'une au moins des revendications 1 à 10, **caractérisé en ce que** le circuit intégré est disposé entre les couches présentant l'effet optique et le papier de sécurité.

12. Papier de sécurité selon l'une au moins des revendications 1 à 11, **caractérisé en ce que** le circuit intégré est une puce de mémoire ou une puce de microprocesseur.

13. Papier de sécurité selon l'une au moins des revendications 1 à 12, **caractérisé en ce que** l'élément de sécurité est un élément de transfert ou une étiquette qui est disposé(e) entièrement sur la surface du papier de sécurité.

14. Papier de sécurité selon la revendication 13, **caractérisé en ce que** l'élément de sécurité présente la forme d'une bande.

15. Papier de sécurité selon l'une au moins des revendications 1 à 12, **caractérisé en ce que** l'élément de sécurité est un fil de sécurité.

16. Papier de sécurité selon l'une au moins des revendications 1 à 14, **caractérisé en ce que** l'élément de couplage occupe une aire de surface d'au moins 20 mm².

17. Papier de sécurité selon l'une au moins des revendications 1 à 16, **caractérisé en ce que** l'élément de sécurité est lié au papier de sécurité de telle façon qu'il ne peut pas en être séparé sans détérioration.

18. Document fiduciaire comportant au moins un élément de sécurité multicouche qui présente au moins un effet optique contrôlable visuellement, ledit élément de sécurité étant disposé entièrement sur la surface du document fiduciaire, dans lequel l'élément de sécurité présente au moins un circuit intégré, dans lequel l'alimentation en énergie du circuit intégré se fait sans contact par le biais d'un élément de couplage, **caractérisé en ce que** l'élément de couplage est une partie du circuit intégré.

19. Document fiduciaire comportant au moins un élément de sécurité multicouche qui présente au moins un effet optique contrôlable visuellement, ledit élément de sécurité étant disposé entièrement sur la surface du document fiduciaire, dans lequel l'élément de sécurité présente au moins un circuit intégré, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, **caractérisé en ce que** la couche métallique est séparée des couches produisant l'effet optique par une couche isolante.

20. Document fiduciaire comportant au moins un élément de sécurité multicouche qui présente au moins un effet optique contrôlable visuellement, ledit élément de sécurité étant disposé entièrement sur la surface du document fiduciaire, dans lequel l'élément de sécurité présente au moins un circuit intégré, le circuit intégré étant disposé entre les couches présentant l'effet optique et le papier de sécurité, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, et dans lequel la couche métallique est également l'une des couches produisant l'effet optique, **caractérisé en ce que** l'élément de couplage est un dipôle en boucle fermée ou une bobine.

21. Document fiduciaire selon la revendication 18, **caractérisé en ce que** le document fiduciaire présente un papier de sécurité selon la revendication 1 ou l'une des revendications 6 à 17, dépendante dans chaque cas de la revendication 1.

22. Document fiduciaire selon la revendication 19, **caractérisé en ce que** le document fiduciaire présente un papier de sécurité selon la revendication 2 ou l'une des revendications 5 à 17, dépendante dans chaque cas de la revendication 2.

23. Document fiduciaire selon la revendication 20, **caractérisé en ce que** le document fiduciaire présente un papier de sécurité selon la revendication 3 ou l'une des revendications 4 à 17, dépendante dans chaque cas de la revendication 3.

24. Document fiduciaire selon l'une des revendications 21 à 23, **caractérisé en ce que** le document fiduciaire est un passeport, un billet de banque ou une carte de crédit.

25. Document fiduciaire selon l'une au moins des revendications 18 à 24, **caractérisé en ce que** le document fiduciaire présente au moins en chévauchant l'élément de sécurité, une impression, en particulier une impression en taille douce.*

26. Élément de sécurité multicouches destiné à être placé sur un document fiduciaire, l'élément de sécurité présentant au moins un effet optique contrôlable visuellement, dans lequel l'élément de sécurité présente au moins un circuit intégré, dans lequel l'alimentation en énergie du circuit intégré se fait sans contact par le biais d'un élément de couplage, **caractérisé en ce que** l'élément de couplage est une partie du circuit intégré.

27. Élément de sécurité multicouches destiné à être placé sur un document fiduciaire, l'élément de sécurité présentant au moins un effet optique contrôlable visuellement, l'élément de sécurité présentant au moins un circuit intégré, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, **caractérisé en ce que** la couche métallique est séparée des couches produisant l'effet optique par une couche isolante.

28. Élément de sécurité multicouches destiné à être placé sur un document fiduciaire, l'élément de sécurité présentant au moins un effet optique contrôlable visuellement, l'élément de sécurité présentant au moins un circuit intégré, le circuit intégré étant disposé à l'intérieur de l'élément de sécurité en étant recouvert par les couches produisant l'effet optique, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, et dans lequel la couche métallique est également l'une des couches produisant l'effet optique, **caractérisé en ce que** l'élément de couplage est un dipôle en boucle fermée ou une bobine.

29. Matériau de transfert pour la pose d'un élément de sécurité multicouches sur un document fiduciaire, le matériau de transfert présentant une couche support sur laquelle la structure stratifiée de l'élément de sécurité est appliquée de manière détachable et l'élément de sécurité présentant au moins un effet optique contrôlable visuellement, la structure stratifiée de l'élément de sécurité présentant au moins un circuit intégré, dans lequel l'alimentation en énergie du circuit intégré se fait sans contact par le biais d'un élément de couplage, **caractérisé en ce que** l'élément de couplage est une partie du circuit intégré.

30. Matériau de transfert pour la pose d'un élément de sécurité multicouches sur un document fiduciaire, le matériau de transfert présentant une couche support sur laquelle la structure stratifiée de l'élément de sécurité est appliquée de manière détachable et l'élément de sécurité présentant au moins un effet optique contrôlable visuellement, la structure stratifiée de l'élément de sécurité présentant au moins un circuit intégré, dans lequel l'alimentation en énergie du circuit intégré se fait sans contact par le biais d'un élément de couplage, l'élément de couplage étant disposé dans une couche de l'élément de sécurité, l'élément de sécurité présentant au moins une couche métallique dans laquelle l'élément de couplage est formé, **caractérisé en ce que** la couche métallique est séparée des couches produisant l'effet optique par une couche isolante.

31. Matériau de transfert pour la pose d'un élément de sécurité multicouches sur un document fiduciaire, le matériau de transfert présentant une couche support sur laquelle la structure stratifiée de l'élément de sécurité est appliquée de manière détachable et l'élément de sécurité présentant au moins un effet optique contrôlable visuellement, la structure stratifiée de l'élément de sécurité présentant au moins un circuit intégré, le circuit intégré étant disposé à l'intérieur de l'élément de sécurité en étant recouvert par les couches produisant l'effet optique, dans lequel l'alimentation en énergie du circuit intégré se fait sans contact par le biais d'un élément de couplage, dans lequel l'élément de couplage est disposé dans une couche de l'élément de sécurité, dans lequel l'élément de sécurité présente au moins une couche métallique dans laquelle l'élément de couplage est formé, et dans lequel la couche métallique est également l'une des couches produisant l'effet optique, **caractérisé en ce que** l'élément de couplage est un dipôle en boucle fermée ou une bobine.

32. Matériau de transfert selon la revendication 30 ou 31, **caractérisé en ce que** le matériau de transfert présente la structure stratifiée suivante :
- une couche support,
- une couche dans laquelle sont présentes des structures de diffraction sous la forme d'une structure en relief,
- une couche métallique dans laquelle un élément de couplage est formé,
- un circuit intégré, et
- une couche d'adhésif thermofusible.

33. Matériau de transfert selon la revendication 30, **caractérisé en ce que** le matériau de transfert présente la structure stratifiée suivante :
- une couche support,
- une couche dans laquelle sont présentes des structures de diffraction sous la forme d'une structure en relief,
- une couche réfléchissante permettant d'observer les structures de diffraction en réflexion,
- une couche isolante,
- une couche métallique dans laquelle un élément de couplage est formé,
- un circuit intégré, et
- une couche d'adhésif thermofusible.

34. Matériau de transfert selon la revendication 32 ou la revendication 33, **caractérisé en ce que** le circuit intégré est relié au moyen d'une couche d'adhésif conducteur à l'élément de couplage.

35. Matériau de transfert selon la revendication 34, **caractérisé en ce que** la couche d'adhésif conducteur est une couche conductrice à base d'argent ou une couche d'adhésif conducteur anisotrope.

36. Matériau de transfert selon l'une au moins des revendications 29 à 35, **caractérisé en ce que** la couche qui produit l'effet optique est une couche imprimée contenant des pigments optiquement variables, en particulier des pigments de couche d'interférence ou à cristaux liquides.

37. Matériau de transfert selon l'une au moins des revendications 29 à 36, **caractérisé en ce que** le circuit intégré est une puce de mémoire ou une puce de microprocesseur.

38. Matériau de transfert selon l'une au moins des revendications 29 à 37, **caractérisé en ce que** la couche de transfert du matériau de transfert est réalisée sous la forme d'une feuille non autoporteuse.

39. Procédé de production d'un matériau de transfert servant à placer un élément de sécurité multicouches sur un document fiduciaire, le matériau de transfert présentant une couche support sur laquelle la structure stratifiée de l'élément de sécurité est préparée de manière détachable et l'élément de sécurité présentant au moins un effet optique contrôlable visuellement, dans lequel l'élément de sécurité présente au moins un circuit intégré, dans lequel l'alimentation en énergie du circuit intégré se fait sans contact par le biais d'un élément de couplage, **caractérisé en ce que** l'élément de couplage est une partie du circuit intégré.

40. Procédé de production d'un matériau de transfert pour la pose d'un élément de sécurité multicouches sur un document fiduciaire, le matériau de transfert présentant une couche support sur laquelle la structure stratifiée de l'élément de sécurité est appliquée de manière détachable et l'élément de sécurité présentant au moins un effet optique contrôlable visuellement, on introduit au moins un circuit intégré dans la structure stratifiée de l'élément de sécurité, dans lequel l'alimentation en énergie du circuit intégré se fait sans contact par le biais d'un élément de couplage, l'élément de couplage étant disposé dans une couche de l'élément de sécurité, l'élément de sécurité présentant au moins une couche métallique dans laquelle l'élément de couplage est formé, **caractérisé en ce qu'**on sépare la couche métallique des couches produisant l'effet optique par une couche isolante.

41. Procédé de production d'un matériau de transfert pour la pose d'un élément de sécurité multicouches sur un document fiduciaire, le matériau de transfert présentant une couche support sur laquelle la structure stratifiée de l'élément de sécurité est appliquée de manière détachable et l'élément de sécurité présentant au moins un effet optique contrôlable visuellement, on introduit au moins un circuit intégré dans la structure stratifiée de l'élément de sécurité en étant recouvert par les couches produisant l'effet optique, dans lequel l'alimentation en énergie du circuit intégré se fait sans contact par le biais d'un élément de couplage, l'élément de couplage étant disposé dans une couche de l'élément de sécurité, l'élément de sécurité présentant au moins une couche métallique dans laquelle l'élément de couplage est formé, et dans lequel la couche métallique est également l'une des couches produisant l'effet optique, **caractérisé en ce que** l'élément de couplage est un dipôle en boucle fermée ou une bobine.

42. Procédé selon la revendication 40 ou 41, **caractérisé par** les étapes consistant à :
a) Préparer une couche support,
b) Déposer au moins une couche produisant un effet optique,
c) Déposer par métallisation sous vide une couche métallique, un élément de couplage étant formé dans la couche métallique,
d) Poser un circuit intégré.

43. Procédé selon l'une au moins des revendications 40 à 42, **caractérisé en ce qu'**une couche isolante est disposée entre les couches produisant l'effet optique et la couche métallique qui doit être déposée à l'étape c).

44. Procédé selon la revendication 39 ou 40, **caractérisé en ce que**, avant l'étape c), une couleur détachable sous la forme de l'élément de couplage et d'éventuels autres motifs ou symboles est imprimée et **en ce que**, après l'étape c), cette couleur imprimée est enlevée ensemble avec la couche métallique.

45. Procédé selon la revendication 42 ou la revendication 44, **caractérisé en ce que** le circuit intégré et l'élément de couplage sont reliés l'un à l'autre par une couche conductrice à base d'argent ou par une couche d'adhésif conducteur anisotrope.

46. Procédé selon l'une au moins des revendications 42 à 45, **caractérisé en ce que**, à l'étape b), on dépose une couche dans laquelle des structures de diffraction sont ensuite estampées sous la forme d'une structure en relief.

47. Procédé selon la revendication 46, **caractérisé en ce que**, à l'étape c), on dépose une couche de vernis durcissant aux UV qui est durcie pendant l'opération d'estampage.

48. Procédé selon la revendication 42 ou 43, **caractérisé en ce que**, à l'étape b), une couche réfléchissante est déposée au moins par zones sur la couche estampée.

49. Procédé selon l'une au moins des revendications 42 à 45, **caractérisé en ce que**, à l'étape b), on dépose au moins une couche métallique et une couche diélectrique ou au moins deux couches diélectriques ayant des indices de réfraction différents, les couches coopérant de façon à produire des impressions visuelles différentes lorsqu'on les observe en réflexion sous des angles d'observation différents.

50. Procédé selon l'une au moins des revendications 42 à 49, **caractérisé en ce que**, dans une étape e), on dépose une couche d'adhésif, de préférence une couche d'adhésif thermofusible.

51. Procédé de fabrication d'un document fiduciaire avec un élément de sécurité, **caractérisé en ce que** la structure stratifiée du matériau de transfert selon l'une au moins des revendications 29 à 38 est transférée par zones sur le document fiduciaire et ensuite la couche support est retirée.

52. Utilisation du matériau de transfert selon l'une au moins des revendications 29 à 38 pour la production d'éléments de sécurité.

53. Utilisation du papier de sécurité selon l'une au moins des revendications 1 à 17 pour sécuriser des produits.

54. Utilisation du document fiduciaire selon l'une au moins des revendications 18 à 25 pour sécuriser des produits.
